# DEMANDE DE BREVET EUROPEEN

(11) **EP 0 907 268 A1**
(43) Date de publication de la demande: **07.04.1999**
(21) Numéro de dépôt: 98402419.0
(22) Date de dépôt: 01.10.1998
(51) Int. Cl.: H04L 1/00

(54) **Dispositif d'emission de signaux numeriques de parole sur un canal de transmission de donnees**

(30) Priorité: 02.10.1997 FR 9712269
(71) Demandeur: Matra Nortel Communications, 29100 Quimper (FR)
(72) Inventeur: Benoit, Sylvie, 75015 Paris (FR); Condette, Nathalie, 78180 Montigny le Brétonneuy (FR); Force, Pierre, 75012 Paris (FR); Mege, Philippe, 92340 Bourg la Reine (FR)
(74) Mandataire: Loisel, Bertrand

(57) **Abrégé**

Dans ce dispositif d'émission de trames de signal numérique sur un canal de transmission de données (8) comprenant un codeur de canal (14) pour protéger des symboles transmis contre des erreurs de transmission, la protection des symboles provenant d'une trame de signal numérique par le codeur de canal (14) étant uniforme, les trames de signal numérique représentant un signal de parole codé selon un codage de source produisant des bits d'importances perceptuelles différentes sur chaque trame, un étage de codage supplémentaire (12) répartit les bits de chaque trame en plusieurs classes en fonction de leurs importances perceptuelles respectives, et applique un codage détecteur et/ou correcteur d'erreurs à au moins une des classes de bits pour produire les symboles fournis au codeur de canal (14), de façon que les différentes classes de bits bénéficient de protections différentes contre les erreurs de transmission.

## Description

La présente invention concerne un dispositif d'émission de signaux numériques sur un canal de transmission de données.

Par "canal de transmission", on entend ici l'ensemble constitué par un canal physique de propagation (radio, câble ...), les modulateurs et démodulateurs utilisés en entrée et en sortie de ce canal physique, ainsi que les codeurs et décodeurs de canal généralement associés. Le codeur de canal reçoit le flux de symboles à transmettre et lui applique un codage redondant. Le modulateur forme le signal effectivement émis sur le canal physique à partir du flux de symboles redondant délivré par le codeur de canal. Au niveau du récepteur, le démodulateur et le décodeur de canal effectuent les opérations inverses.

Les codages redondants les plus couramment utilisés reposent sur des codes en blocs ou sur des codes convolutifs. Les structures de ces codes autorisent des détections, et souvent des corrections d'erreurs de transmission dues aux conditions de propagation imparfaites. Les symboles transmis bénéficient ainsi d'une protection contre les erreurs. En détectant des erreurs, le récepteur peut identifier des trames fausses et prendre des mesures appropriées : demande de répétition, extrapolation à partir d'autres trames, procédure par défaut ... La protection est encore plus importante lorsque le code a des capacités de correction.

Un canal de transmission de données confère en principe un degré de protection uniforme aux symboles constituant une trame de signal. En d'autres termes, une erreur sur un symbole pourra être détectée et/ou corrigée de la même manière quelle que soit la position de ce symbole dans la trame. Ceci est dû au fait qu'une trame de signal transmise sur un tel canal provient généralement d'un découpage arbitraire d'un flux de données informatiques.

D'autres types de canaux de transmission procurent des protections variables aux symboles constituant une trame de signal. C'est notamment le cas des canaux conçus pour la transmission de signaux de parole délivrés par un codeur de source. Dans ce cas, le codeur de source et le codeur de canal sont normalement conçus et optimisés conjointement.

Un signal numérique de parole issu d'un codeur de source est constitué de bits d'importance perceptuelle inégale. Une erreur portant sur la transmission d'un bit donné est donc plus ou moins audible et a des conséquences d'importance variable sur la compréhension du message transmis, en fonction de l'importance perceptuelle de ce bit. Il convient donc de prévoir une protection contre les erreurs de transmission qui prenne en compte l'importance perceptuelle des bits à transmettre, c'est-à-dire qui soit d'autant plus forte que l'importance perceptuelle des bits est grande.

Certains systèmes de télécommunication supportent à la fois des canaux de transmission de données et des canaux distincts de transmission de signaux de phonie issus d'un codeur de source. C'est le cas par exemple des systèmes réalisés selon la norme européenne GSM de radiocommunication avec les mobiles.

La présente invention a pour but de transmettre dans de bonnes conditions des signaux de parole sur un canal de transmission de données.

Dans ce but, la présente invention propose un dispositif d'émission de trames de signal numérique sur un canal de transmission de données, le canal de transmission de données comprenant un codeur de canal pour protéger des symboles transmis contre des erreurs de transmission, par introduction de redondance, la protection des symboles provenant d'une trame de signal numérique par le codeur de canal étant uniforme, caractérisé en ce que les trames de signal numérique représentent un signal de parole codé selon un codage de source produisant des bits d'importances perceptuelles différentes sur chaque trame, le dispositif comprenant un étage de codage supplémentaire qui répartit les bits de chaque trame en plusieurs classes en fonction de leurs importances perceptuelles respectives, et qui applique un codage détecteur et/ou correcteur d'erreurs à au moins une des classes de bits pour produire les symboles fournis audit codeur de canal, de façon que les différentes classes de bits bénéficient de protections différentes contre les erreurs de transmission.

On peut ainsi faire passer des signaux de phonie sur un canal de données malgré l'inadéquation que présentent a priori ces canaux à cette fin. Les bits perceptuellement les plus importants peuvent bénéficier de la protection requise. Ce dispositif s'applique notamment de manière intéressante à la transmission de signaux multimédia : il n'est plus nécessaire de prévoir un canal différent spécifiquement pour la partie phonie de tels signaux.

Dans un mode particulier de réalisation, l'étage de codage supplémentaire applique un codage détecteur et correcteur d'erreurs du type code en blocs, tel qu'un code BCH.

A titre d'illustration, la présente invention sera plus particulièrement décrite ici dans son application aux radiocommunications avec les mobiles suivant la norme GSM, les signaux numériques de parole étant fournis en sortie d'un vocodeur selon la norme G.729 de l'Union Internationale des Télécommunications (UIT-T). Dans ce cas, le canal de transmission de données est un canal TCH/F9.6 du système GSM en mode transparent.

Dans un mode particulier de réalisation, chaque trame TCH/F9.6 contient deux trames G.729 entrelacées.

L'invention est applicable par exemple aux signaux de phonie chiffrée produits par un équipement de radiocommunication à mode de communication sécurisée du type décrit dans la demande de brevet français de numéro de dépôt 96 08514.

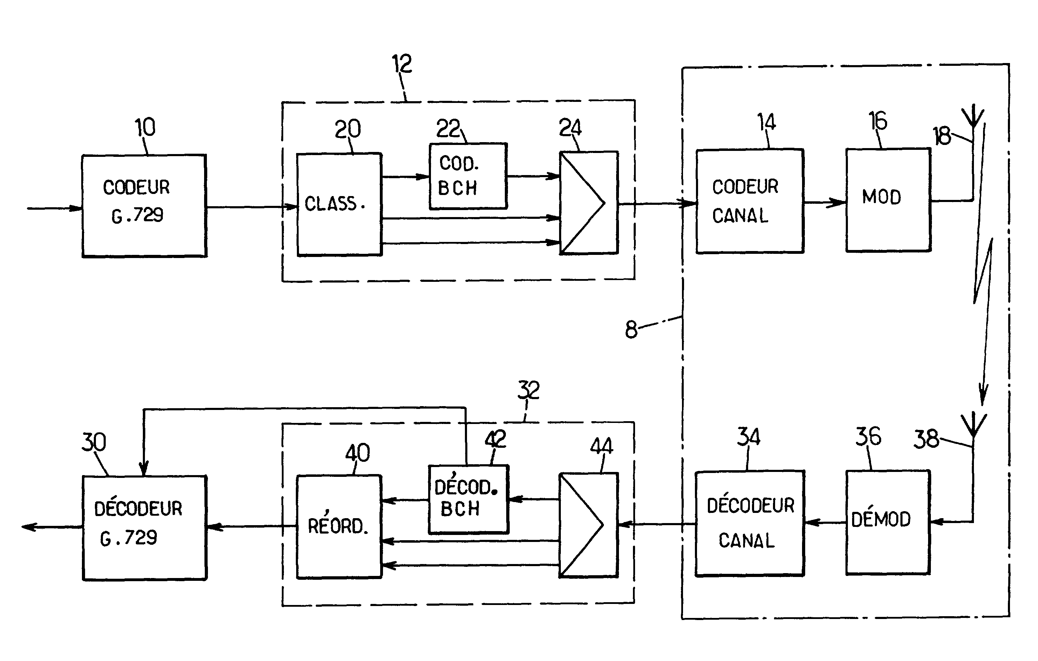

D'autres buts et aspects de la présente invention apparaîtront à la lecture de la description détaillée qui suit d'un mode particulier de réalisation, donné à titre d'exemple non limitatif. La description se réfère au dessin qui l'accompagne : la figure unique est une représentation schématique d'une chaîne de transmission mettant en oeuvre la présente invention.

Le vocodeur G.729, normalisé par l'UIT-T en 1995, est un codeur de parole du type CS-ACELP (en anglais "Conjugate Structure - Algebraic Code Excited Linear Prediction"), qui fait partie de la famille des codeurs à prédiction linéaire excités par code, dits codeurs CELP.

Les signaux fournis en entrée du vocodeur G.729 sont sous forme de trames de durée 10 ms, contenant chacune 80 échantillons numériques à 8 kHz.

Le vocodeur analyse chaque trame en deux sous-trames pour en extraire divers paramètres du modèle CELP, en particulier les coefficients du filtre à prédiction linéaire, ainsi que les indices et gains des dictionnaires d'excitations stochastique et adaptatif. Le tableau 1 ci-dessous résume, pour chaque paramètre extrait, le nombre de bits sur lesquels ce paramètre est codé, et la position de ces bits, de 1 à 80, dans la trame du signal. Le débit du vocodeur est de 8 kbit/s.

La figure illustre l'utilisation d'un codeur de source 10 de type G.729, et d'un décodeur associé 30, dans une chaîne de transmission reposant sur un canal de données 8, c'est-à-dire un canal de transmission procurant une protection uniforme aux trames de symboles qui lui sont envoyées.

Dans le dispositif émetteur, un étage de codage supplémentaire 12 est relié à la sortie du codeur de source 10. Cet étage de codage supplémentaire comprend un module 20 de classification de bits relié à la sortie du codeur de source 10.

**Tableau 1.**

| Paramètre | Nombre de bits | Positions |
|---|---|---|
| indices des coefficients du filtre | 18 | 1 à 18 |
| retard de l'excitation du dictionnaire adaptatif | 13 | 19 à 26-52 à 56 |
| parité du pitch | 1 | 27 |
| indices du dictionnaire stochastique | 26 | 28 à 40-57 à 69 |
| signe de l'excitation | 8 | 41 à 44-70 à 73 |
| gains | 14 | 45 à 51-74 à 80 |

Pour chaque trame reçue du codeur de source 10, le module 20 classe les bits en plusieurs classes en fonction de leur importance perceptuelle. Ces diverses classes peuvent être établies au moyen de tests, consistant par exemple à affecter d'une erreur un même bit sur plusieurs trames de parole codée, puis à évaluer le caractère plus ou moins audible de cette erreur. Dans l'exemple décrit ici, de tels tests montrent qu'on peut distinguer trois classes de bits.

Une classe 1 contient des bits désignés par les positions suivantes dans la trame, qui ont une importance perceptuelle très forte : bits 19 à 24 et 52 à 54, correspondant au retard de l'excitation ; bits 2 à 13, correspondant à des coefficients du filtre ; bit 27, correspondant à la parité du "pitch" ou hauteur totale ; bits 46 et 47, 51, 80, correspondant à des gains.

Une classe 2 contient des bits d'importance perceptuelle moyenne : bits 75, 76, correspondant à des gains ; bit 25, correspondant au retard de l'excitation ; bits 41 à 44 et 70 à 73, correspondant au signe de l'excitation ; bit 55, correspondant au retard de l'excitation ; bit 1, correspondant à un coefficient du filtre.

Une classe 3 contient le restant des bits de la trame, qui ont une importance perceptuelle faible.

Chaque trame se compose alors de 26 bits de classe 1, 13 bits de classe 2 et 41 bits de classe 3.

Le module 20 de classification des bits réordonne les bits de chaque trame en groupant en début de trame les bits de classe 1, puis les bits de classe 2 et en fin de trame, les bits de classe 3. La table suivante donne, à titre indicatif, les nouvelles positions des bits 1 à 80 d'origine de chaque trame après réordonnancement :
39, 10, 11, 12, 13, 14, 15, 16, 17, 18, 19, 20, 21, 40, 41, 42, 43, 44, 1, 2, 3, 4, 5, 6, 29, 45, 22, 46, 47, 48, 49, 50, 51, 52, 53, 54, 55, 56, 57, 58, 30, 31, 32, 33, 59, 23, 24, 60, 61, 62, 25, 7, 8, 9, 38, 63, 64, 65, 66, 67, 68, 69, 70, 71, 72, 73, 74, 75, 76, 34, 35, 36, 37, 77, 27, 28, 78, 79, 80, 26

Cela signifie qu'après réordonnancement, le bit de position 1 en sortie du vocodeur est placé en position 39 (classe 2), le bit de position 2 en sortie du vocodeur est placé en position 10 (classe 1), et ainsi de suite.

Le module 20 de classification de bits comprend autant de sorties qu'il y a de classes de bits.

On choisit ensuite de protéger les bits d'une ou plusieurs classes contre les erreurs de transmission. Le mode particulier de réalisation illustré par la figure prévoit de protéger uniquement la classe 1. L'étage de codage supplémentaire 12 comprend à cet effet un module 22 de codage détecteur et/ou correcteur d'erreurs, relié à la sortie du module 20 de classification de bits qui fournit les bits de classe 1.

Le module 22 peut mettre en oeuvre un code en blocs, par exemple un code BCH, qui permet à la fois la détection et la correction d'erreurs. A titre d'exemple non limitatif, pour protéger la classe 1, on peut choisir un code BCH raccourci, de dimension 7, permettant de corriger deux erreurs et de détecter plus de deux erreurs, ayant pour polynôme générateur g₁(x) = x⁷ + x + 1. Un tel code ajoute 14 bits de redondance aux 26 bits d'information.

En variante, on peut choisir de protéger également la classe 2, voire la classe 3, avec des degrés de protection, c'est-à-dire des capacités de détection et de correction des codes, décroissants.

La sortie du module de codage 22, ainsi que les autres sorties du module 20 de classification de bits, sont reliées à l'entrée d'un module 24 de multiplexage.

La fonction du module 24 de multiplexage est de fournir des trames ayant un format adapté aux caractéristiques du codeur de canal 14 existant dans le canal de transmission 8.

Dans l'exemple décrit ici, le canal de transmission 8 est un canal TCH/F9.6 en mode transparent conforme aux normes GSM. Chaque trame TCH/F9.6 est constituée de 240 bits, dont 48 bits de signalisation répartis uniformément dans la trame et réservés au protocole RLP (en anglais "Radio Link Protocol", voir Recommandation GSM 04.21 de l'ETSI (European Telecommunications Standard Institute), "Rate adaptation on the Mobile Station - Base Station System", septembre 1995). Une trame est transmise toutes les 20 ms. Le débit utile du canal est de 9,6 kbit/s.

Une trame issue du vocodeur G.729 ayant une durée de 10 ms, on transmet deux trames de parole sur une trame TCH/F9.6. Le nombre de bits disponible pour une trame G.729 est de (240-48)/2 = 96. On a vu qu'une trame G.729 comprend 80 bits. Il reste donc 96-80 = 16 bits pour le codage détecteur et/ou correcteur d'erreurs. Le code BCH raccourci de dimension 7 défini plus haut occupe 14 de ces bits. On peut utiliser les 2 bits restants pour transmettre des données utiles, à un débit brut de 200 bit/s, dans le cadre d'une communication multiplexant voix et données. On peut aussi utiliser ces 2 bits pour transmettre des informations de contrôle.

Le canal TCH/F9.6 possède une protection intrinsèque uniforme fondée sur un code convolutif de rendement 1/2 et de mémoire 4. Il est en outre prévu un entrelacement de profondeur 19.

Dans un mode particulier de réalisation, afin d'améliorer l'efficacité du code détecteur et/ou correcteur d'erreurs, on effectue un entrelacement des deux trames G.729 contenues dans chaque trame TCH/F9.6. Le module 24 de multiplexage disperse ainsi les bits au sein de la trame TCH/F9.6, ce qui permet de lutter plus efficacement contre les erreurs survenant par paquets, dont le risque d'apparition est relativement élevé en transmission de données sur le système GSM, notamment en raison du phénomène d'évanouissement ou "fading" de Rayleigh, et du comportement du codage convolutif présent sur le canal GSM TCH/F9.6.

La sortie du module 24 de multiplexage, qui est aussi la sortie de l'étage de codage supplémentaire 12, est reliée à l'entrée du codeur de canal 14, qui appartient à un canal 8 de type TCH/F9.6 dans l'exemple décrit ici. Le codeur de canal 14 est relié au modulateur 16 qui construit le signal radio émis sur une antenne 18.

A la réception, on trouve un dispositif essentiellement symétrique à celui décrit précédemment, comprenant une antenne de réception 38, un démodulateur 36 et un décodeur de canal 34, appartenant au canal de transmission de données 8. Pour récupérer le signal d'entrée du décodeur de source 30 à partir de la sortie du décodeur de canal 34, le récepteur comporte un étage 32 de décodage supplémentaire. Cet étage 32 comprend un module 44 de démultiplexage qui extrait pour chaque trame les 40 bits redondants correspondant à la classe 1 et les fournit à un module de décodage 42. Ce dernier effectue les opérations de détection et/ou de correction d'erreurs qu'autorise le code BCH employé par le module 22 de l'émetteur. Enfin, un module 40 réordonne les bits reçus et décodés pour les adresser au décodeur G.729 30.

Si le module de décodage 42 possède une capacité de détection d'erreurs, il délivre une information de trame erronée dans le cas où une erreur a été détectée. Cette information de trame erronée peut être exploitée par le décodeur G.729 30, qui effectue par exemple une extrapolation sur le signal de parole, de façon à limiter l'impact des erreurs sur la qualité du signal de parole restitué.

## Revendications

1. Dispositif d'émission de trames de signal numérique sur un canal de transmission de données (8), le canal de transmission de données (8) comprenant un codeur de canal (14) pour protéger des symboles transmis contre des erreurs de transmission, par introduction de redondance, la protection des symboles provenant d'une trame de signal numérique par le codeur de canal (14) étant uniforme, caractérisé en ce que les trames de signal numérique représentent un signal de parole codé selon un codage de source produisant des bits d'importances perceptuelles différentes sur chaque trame, le dispositif comprenant un étage de codage supplémentaire (12) qui répartit les bits de chaque trame en plusieurs classes en fonction de leurs importances perceptuelles respectives, et qui applique un codage détecteur et/ou correcteur d'erreurs à au moins une des classes de bits pour produire les symboles fournis audit codeur de canal (14), de façon que les différentes classes de bits bénéficient de protections différentes contre les erreurs de transmission.

2. Dispositif selon la revendication 1, caractérisé en ce que ledit étage de codage supplémentaire (12) applique un codage détecteur et correcteur d'erreurs du type code en blocs.

3. Dispositif selon la revendication 2, caractérisé en ce que le code en blocs est de type BCH.

4. Dispositif selon la revendication 1, 2 ou 3, caractérisé en ce que le codage de source est du type G.729 et le canal de transmission de données est un canal TCH/F9.6 en mode transparent d'un système de radiocommunication GSM.

5. Dispositif selon l'une quelconque des revendications précédentes, caractérisé en ce que le signal de parole codé est sous forme de trames plus courtes que les trames de signal numérique fournies au codeur de canal (14), et en ce que l'étage de codage supplémentaire (12) entrelace plusieurs trames de signal de parole codé après application dudit codage détecteur et/ou correcteur pour former une trame de signal numérique fournie au codeur de canal (14).

6. Dispositif selon l'une quelconque des revendications précédentes, caractérisé en ce que les symboles soumis au codeur de canal incluent au moins un bit par trame laissé disponible par le codage de source et le codage détecteur et/ou correcteur d'erreurs et utilisé pour transmettre des données utiles ou des informations de contrôle, à bas débit.
